# EUROPEAN PATENT APPLICATION

(11) **EP 4 527 949 A1**
(43) Date of publication of application: **26.03.2025**
(21) Application number: 23198303.2
(22) Date of filing: 19.09.2023
(51) Int. Cl.: C21D 7/06, B23K 26/356, C21D 10/00, B23K 26/046, B23K 26/04, B23K 26/0622, B23K 26/08, B64D 37/30, B64F 5/10, B23K 101/04, B23K 101/06, B23K 101/10, B23K 101/12, B23K 101/14, B23K 103/04, B23K 103/10, B23K 103/14

(54) **LASER SHOCK PEENING DEVICE, APPARATUS AND METHOD, PART OF A HYDROGEN STORAGE AND/OR SUPPLY SYSTEM, AND AIRCRAFT OR SPACECRAFT COMPRISING A HYDROGEN STORAGE AND/OR SUPPLY SYSTEM INCLUDING SUCH A PART**

(71) Applicant: Airbus Operations GmbH, 21129 Hamburg (DE); Airbus SAS, 31700 Blagnac Cedex (FR)
(72) Inventor: LINDE, Peter, 21129 Hamburg (DE); LENCZOWSKI, Blanka, 21129 Hamburg (DE)
(74) Representative: Isarpatent

(57) **Abstract**

The invention relates to a laser shock peening device (5"; 5‴) for treating an internal surface (3), comprising a probe (37"; 37‴) formed with probe segments (51, 51a) connected in series such that successive ones of the probe segments can be moved relative to each other. A laser beam transfer arrangement (55") is capable of transferring a pulsed laser beam from a first to a second end (56", 57") of the series of probe segments. The probe segment (51a) at the second end is configured as a probe head (38") adapted to orient the laser beam (30b") and direct it towards the internal surface. Further, there is proposed a laser shock peening apparatus (6'; 6"; 6‴) for treating a surface (3), comprising a probe (37'; 37"; 37‴) formed with a probe head (38'; 38"), a laser beam transfer arrangement (55; 55") for transferring a pulsed laser beam towards the probe head, and a distance measurement device (80, 81) for contactless distance measurement between the probe and the surface. The probe or the probe head is adapted to orient the laser beam (30b'; 30b") and direct it towards the surface. Moreover, the invention relates to a method of treating an internal surface (3) of a part (1) made with a metallic material by laser shock peening, to a part of a hydrogen storage and/or supply system (107), and to an aircraft or spacecraft (100) comprising a hydrogen storage and/or supply system including such a part.

## Description

### TECHNICAL FIELD OF THE INVENTION

The invention relates to a laser shock peening device and apparatus for treating a surface of a part, to a method of treating an internal surface of a part by laser shock peening, as well as to a part of a hydrogen storage and/or supply system adapted to be installed in an aircraft or spacecraft and to an aircraft or spacecraft comprising a hydrogen storage and/or supply system including at least one part of this type.

### TECHNICAL BACKGROUND

Even though the invention may be useful in a variety of applications in many fields of technology, the invention and the underlying problem will be described in the following in greater detail and exemplary manner with respect to storage and supply of hydrogen in a hydrogen-powered aircraft, but without limiting the invention to that effect.

In order to avoid emissions, in particular of carbon dioxide, generated by conventional commercial aircraft that use kerosene as fuel, hydrogen-based propulsion of aircraft has recently been proposed. Propulsion using hydrogen combustion, and electric propulsion based on hydrogen fuel cells, have been suggested. Also, hydrogen might be used to provide power to other systems in aircraft or spacecraft, besides propulsion.

Storage of hydrogen in cryogenic, liquid form aboard the aircraft is volume efficient. Various components and systems for storing, containing or transferring hydrogen in liquid and gaseous form and regulating hydrogen flow may be involved when implementing a hydrogen-powered aircraft. Components containing hydrogen, e.g. tanks, conduits and other systems, will usually be under pressure.

It is established that metallic alloys that are subjected to mechanical stress and at the same time are in permanent contact with hydrogen will experience reactions between hydrogen on the atomic level and the metallic microstructure.

For instance, hydrogen may enter the metallic material through defects in the surface of the metallic alloy, due to the small size of the hydrogen atom. The cohesion in the microstructure, by which single grains thereof are held together, starts to be affected detrimentally. This is known as hydrogen embrittlement.

The first mechanical effect of hydrogen embrittlement is reduced ductility. Subsequent mechanical effects are deterioration of moduli and strength, which may both contribute to premature failure of an affected part.

Laser shock peening was pioneered in the 1960s when it was discovered that short laser pulses could transmit higher energy than constant laser beams. In 1971, the Batelle Institute tested effects of laser shock peening on mechanical properties and confirmed improved mechanical behaviour.

It has been demonstrated that after laser shock peening, the grain structure of any metal alloy will be more uniform in its distribution, and defects are largely disappearing, see Gujba, A.K., Mamoun, M., "Laser peening process and its impact on materials properties in comparison with shot peening and ultrasonic impact peening", Materials 7(12), pp. 7925-7974, 2014.

Research on laser shock peening has largely focused on mechanical effects for static and fatigue loads. Only more recently, the effect of laser shock peening on hydrogen brittleness has been considered. See Kumar, G.R.., Rajyalakshmi, G., Swaroop, S., "A critical appraisal of laser peening and its impact on hydrogen embrittlement of titanium alloys", Proc. of the Institution of Mechanical Engineers, Part B. Journal of Engineering Manufacture, Vol. 233, Issue 13, 2019. It has been initially found that laser shock peening has a clearly positive effect on hydrogen embrittlement in steel materials. More recently, Ti-alloys have been investigated. It has been indicated that positive effects are attributed to better grain distribution, less defects in the surface, and generally an induced compressive stress.

Laser peening for the reduction of hydrogen embrittlement has also been described in US 2007/0221641 A1.

It has been suggested in US 2003/0052103 A1, as an alternative to laser peening using a laser beam travelling freely from an optical lens to a target, to deliver laser pulses through a set of fiber optical cables.

Moreover, in US 2019/0321911 A1, a laser shock peening apparatus for use with a workpiece is described, wherein the workpiece has a cavity configured as a cylindrical, straight bore. The bore is configured to receive a fastener, e.g. a rivet. The apparatus of US 2019/0321911 A1 comprises a probe in the form of a cylindrical tubular body, which is longitudinally inserted into the bore for treating an inner surface of the bore by laser shock peening.

In view of this background, it would be desirable to prevent or delay hydrogen embrittlement of parts having complex surfaces, particularly within internal passages and cavities of various systems, conduits, installations, devices, accessories or parts in general that come into direct contact with hydrogen, especially in a hydrogen-powered aircraft or spacecraft. In particular, it would be desirable to prevent or delay such hydrogen embrittlement within passages or cavities of essentially arbitrary shape.

### SUMMARY OF THE INVENTION

A problem to be solved by the present invention therefore is to enable and/or facilitate a treatment of various kinds of surfaces of parts, especially internal surfaces, by laser shock peening, in order to counter an embrittling effect of hydrogen in contact with those surfaces. A further problem to be solved by the invention is to prevent or delay hydrogen embrittlement in parts of a hydrogen storage and/or supply system and to provide a correspondingly improved aircraft or spacecraft having a system of this kind.

One or more of these problems is/are solved by a device having the features of claim 1 and/or by an apparatus having the features of claim 7 and/or by a method having the features of claim 10 and/or by a part having the features of claim 13 and/or by an aircraft or spacecraft having the features of claim 16.

Advantageous developments and improvements of the invention are contained in the dependent claims as well as in the description referring to the drawings.

Accordingly, the invention proposes a laser shock peening device for treating an internal surface of a part made with a metallic material. The laser shock peening device comprises a probe formed with a plurality of probe segments that are connected in series in such a manner that successive ones of the probe segments can be moved relative to each other, and a laser beam transfer arrangement capable of transferring a pulsed laser beam provided by a laser source from a first end of the series of probe segments to a second end of the series of probe segments. Herein, the probe segment at the second end of the series is configured as a probe head adapted to orient the laser beam provided via the laser beam transfer arrangement and to direct the laser beam towards the internal surface of the part.

It is an idea of the invention to enable laser shock peening of surfaces that are difficult to access, such as internal surfaces, and/or may be formed with arbitrary geometry, and in this manner to provide an expedient and effective way of treating those surfaces against hydrogen embrittlement. The series of movable probe segments makes it possible to adapt an overall shape of the probe, which may preferably be mechanically held at or near the first end of the series of probe segments and may extend from the first end in a cantilevered manner in order to position the probe head for laser shock peening of the surface. In this way, the probe can be made flexible and bendable in order to provide it with an adaptable shape.

In particular, the internal surface forms a boundary of a cavity or passage in the part. For example, the part may be formed as a conduit or system or a fitting or accessory, in particular a straight section of a conduit, e.g. a straight pipe, or a bent section of a conduit, e.g. a pipe bend, or a coupling or a connector or a manifold or a bifurcation or a heat exchanger or a pump or a valve or another fluid flow regulation or control device, or the part may be a tank or vessel. The part, such as the conduit, system, fitting, accessory, tank or vessel, may preferably be pressurizable. In this way, advantageously, reliable and durable systems for handling and storing of hydrogen can be implemented.

Further, in particular, the cavity or passage may follow a non-straight path and/or the cavity or passage may comprise at least one change in cross-sectional shape and/or in cross-sectional area and/or the cavity or passage may comprise at least a portion having a non-circular cross-section. A great variety of parts can in this way be treated against hydrogen embrittlement. Accordingly, metallic surfaces implementing complex flow paths in a hydrogen storage and/or supply system may be efficiently protected against such embrittlement.

In accordance with a development of the laser shock peening device, the probe head is configured to direct the pulsed laser beam to a target portion of the internal surface located laterally with respect to the probe. In this way, the probe may be inserted comparatively easily in a gradual manner into the cavity or passage and the surface can be treated step by step.

Further, the probe head of the laser shock peening device may be configured to selectively orient and/or re-orient the laser beam emanating from the probe head. Thus, surfaces of many types and shapes can be efficiently treated.

According to an improvement of the laser shock peening device, at least one of the probe segments, preferably at least the probe head, more preferably several or all of the probe segments, is or are provided with at least one distance sensor device configured to perform a contactless distance measurement between the probe segment and the internal surface. Contactless distance measurement(s) between one or more of the probe segments and the internal surface advantageously helps to prevent collisions between the probe and the surface. In this manner, damage to the surface by scratching, or contamination of the surface, can be avoided. Moreover, a contactless distance measurement between the probe head and the surface to be treated by laser shock peening enables to treat each location of the surface exactly with the intended pulse energy and/or focus size. Further, a constant distance during the treatment of the surface can be maintained, which helps to equally and uniformly treat the surface spot by spot. Alternatively, the distance may in some embodiments be varied in a controlled manner in order to implement a laser shock peening treatment that is not uniform across the surface but varies in a defined manner, e.g. for obtaining a variation in the induced compressive stress.

In a further improvement, one, several or all of the probe segments may each be provided with a plurality of distance measurement devices configured to perform distance measurements in a plurality of directions. In this way, the position of each probe segment with respect to the surface can be detected more reliably.

In an alternative development of the laser shock peening device, the probe may be provided with one or more spacers, which is or are configured to mechanically contact the surface and thereby to maintain a predefined and/or adjustable distance between the probe and the part. Each spacer may be provided with at least one wheel in order to smoothly contact the surface without causing scratches. While this development relies on mechanical contact of the probe and the surface to be treated, it may be simpler to be implemented than a laser-based distance measurement.

In a further development of the laser shock peening device, the probe head is configured to direct the laser beam to a target portion of the internal surface located laterally with respect to the probe, and the distance sensor device may be configured to perform the contactless distance measurement between the probe head and the target portion of the surface.

According to a development of the laser shock peening device, at least one of the probe segments is provided with a drive device, in particular an electric motor, and is mechanically connected to a neighboring one of the probe segments by a pivotable segment arm, wherein the drive device is adapted to pivot the segment arm. In this way, the shape of the probe can be adapted in an automatic, controlled manner, e.g. based on one or more of the distance measurement(s) between the probe segment(s) and the internal surface.

Preferably, each of the probe segments except the probe head is provided with a drive device and a segment arm of this kind. Accordingly, a probe having a high adaptability for use e.g. with cavities or passages of various shapes is obtained.

For example, a number of the probe segments, including the probe head, may be chosen between 3 and 10. In one example, the probe may comprise 4 or 5 probe segments, including the probe head. Using such a probe, it may be possible to perform laser shock peening on internal surfaces for a wide variety of parts. In particular, a number of probe segments and hence a length of the probe may be chosen such that cavities or passages of pre-defined maximum depth can be treated.

In an improvement of the laser shock peening device, the probe head includes an optical device, in particular comprising a mirror, and the probe head is configured to orient the laser beam by pivoting the laser beam about a first axis that locally substantially follows a longitudinal direction of extension of the probe and/or about a second axis that is locally non-parallel, in particular transverse or perpendicular, to the longitudinal direction of extension of the probe. In this way, many types of surfaces can be treated by laser shock peening in a flexible manner. In addition, in some implementations, the optical device may for example also be configured to focus the laser beam. For example, focussing the laser beam may also be achieved using the mirror.

Further, in particular, the probe has a generally elongated shape. For instance, the probe may be insertable into the cavity or passage in such a way that the longitudinal direction of extension of the probe locally substantially follows a longitudinal direction of extension of the cavity or passage.

According to a preferred development of the laser shock peening device, the laser beam transfer arrangement includes at least one optical fiber, in particular an optical fiber cable comprising a bundle of optical fibers. In this way, the pulsed laser beam can be transferred from a laser source, which is conveniently arranged outside of the part, to the probe head, which is configured to deliver the pulsed laser beam to the surface and may be arranged within a cavity or passage that is possibly narrow and/or intricately shaped. Also, optical fiber cables can be bent without compromising the transfer of the laser beam, and hence, a probe that is capable of changing its overall shape can be implemented.

According to a further aspect, the invention proposes a laser shock peening apparatus for treating a surface of a part made with a metallic material. The laser shock peening apparatus comprises a probe formed with a probe head, a laser beam transfer arrangement capable of transferring a pulsed laser beam provided by a laser source along the probe towards the probe head, and at least one distance measurement device, in particular a laser distance sensor, configured to perform a contactless distance measurement between the probe and the surface of the part, in particular between the probe head and the surface. The probe or the probe head is adapted to orient the laser beam provided via the laser beam transfer arrangement and to direct the laser beam towards the surface of the part.

Thus, it is a further idea of the invention to perform a contactless distance measurement by a probe which at the same time is used to perform laser shock peening. This facilitates an exact, effective treatment in particular of surfaces that may have intricate shapes or are difficult to access. The distance measurement may enable to equally and uniformly treat the surface, or may, in other implementations, contribute to implementing a laser shock peening treatment that can vary across the surface in a defined manner, e.g. for implementing a variation in induced compressive stress.

In particular, the surface is an internal surface of the part which forms a boundary of a cavity or passage in the part.

In a development of the apparatus, the probe may be configured with an adaptable shape. In particular, the shape of the probe may be adaptable to a shape of the cavity or passage in the part.

According to an improvement of the apparatus, the probe head is configured to direct the laser beam to a target portion, or target spot, of the surface located laterally with respect to the probe and the distance sensor device is configured to perform the contactless distance measurement between the probe head and the target portion of the surface.

Moreover, there is proposed a method of treating an internal surface of a part made with a metallic material by laser shock peening, wherein the internal surface forms a boundary of a cavity or passage in the part and the part has an opening providing access to the cavity or passage from outside of the part. The method includes:
- introducing a probe formed with a probe head into the cavity or passage through the opening with the probe head ahead;
- performing laser shock peening using a pulsed laser beam emanating from the probe head towards the internal surface; and
   while the probe head is within the cavity or passage,
   - changing a distance between the probe head and the internal surface and/or
   - moving a position of the probe head within a cross-sectional plane of the cavity or passage; and/or
   - changing an beam direction of the pulsed laser beam by tilting the beam direction about an axis that is locally transverse to a path of extension of the cavity or passage and/or
   - changing an overall shape of the probe.

In a development of the method, the cavity or passage follows a non-straight path and/or comprises at least one change in cross-sectional shape and/or comprises at least a portion having a non-circular cross-section.

According to an improvement, the method includes performing a contactless distance measurement between the probe and the internal surface, in particular between the probe head and the internal surface. This improvement helps to perform effective laser shock peening and, at the same time, to prevent scratching and/or contamination of the internal surface.

In a further development, the method includes performing a plurality of contactless distance measurements between different locations along the probe and the internal surface.

Alternatively, the method may include contacting the internal surface by one or more spacers connected to the probe. In this way, a distance between the probe and the internal surface may be maintained and/or the probe can be maintained in a centered positioned in the cavity or passage in a simple manner.

In particular, the method may be performed using the laser shock peening device or laser shock peening apparatus as proposed in accordance with the invention.

Further, the invention provides a part of a hydrogen storage and/or supply system adapted to be installed in an aircraft or spacecraft. The part comprises an internal metallic surface which, during use, is constantly or temporarily in direct contact with liquid hydrogen and/or gaseous hydrogen, wherein the internal metallic surface forms a boundary of a cavity or passage in the part. The internal metallic surface has been treated by laser shock peening.

Further, in particular, the cavity or passage may follow a non-straight path and/or the cavity or passage may comprise at least one change in cross-sectional shape and/or in cross-sectional area and/or the cavity or passage may comprise at least a portion having a non-circular cross-section.

In a development, the part is a conduit or system or a fitting or accessory, in particular a straight section of a conduit, e.g. a straight pipe, or a bent section of a conduit, e.g. a pipe bend, or a coupling or a connector or a manifold or a bifurcation or a heat exchanger or a pump or a valve or another fluid flow regulation or control device, or the part may be a tank or vessel.

In particular, the part is made from a metal. More particularly, the part may be made from a titanium alloy or from an aluminum alloy or from a steel. Parts made from a titanium alloy or aluminum alloy are particularly lightweight. Further, metallic parts have low permeability, which is advantageous when such parts are intended for use in hydrogen storage and/or supply.

Still further, the invention provides an aircraft or spacecraft comprising a hydrogen storage and/or supply system which includes at least one part according to the invention. Such an aircraft or spacecraft is reliable and durable.

The improvements, developments and enhancements described above in relation to one or more of the laser shock peening device and apparatus, the method, the part as well as the aircraft or spacecraft may be applied to any one of the laser shock peening device and apparatus, the method, the part as well as the aircraft or spacecraft of the invention in analogous manner.

Further, the method of the invention may in particular be performed using the laser shock peening device or apparatus of the invention. Moreover, in particular, the internal metallic surface of the part of the invention may have been treated by laser shock peening using the method, the device and/or the apparatus of the invention.

### BRIEF SUMMARY OF THE DRAWINGS

The present invention is explained in more detail below with reference to the embodiments shown in the schematic figures, wherein:
- Fig. 1: shows an exemplary hydrogen-powered aircraft comprising a hydrogen storage and supply system including parts treated in accordance with embodiments of the invention;
- Fig. 2: shows a hydrogen storage and supply system of the aircraft shown in Fig. 1, schematically, including an exemplary hydrogen storage tank and various different exemplary parts that are shown only schematically and comprise internal cavities and passages which are treated in accordance with embodiments of the invention;
- Fig. 3: shows an exemplary part, made from a metallic material, having an untreated internal surface, along with a detail view (D3) schematically illustrating the untreated microstructure close to the internal surface;
- Fig. 4: shows, in schematic manner, hydrogen atoms entering the metallic microstructure near the internal surface in Fig. 3 and passing between grains, in a beginning state, causing deterioration of cohesion between the grains;
- Fig. 5: schematically displays the detail view of Fig. 4 at a later time, with developing hydrogen embrittlement, for illustration;
- Fig. 6: schematically shows a diagram illustrating deterioration of ductility of a metal as an effect of hydrogen embrittlement;
- Fig. 7: schematically shows a diagram illustrating deterioration of modulus and strength of a metal as an effect of hydrogen embrittlement;
- Fig. 8: shows a general and exemplary illustration of laser shock peening applied to a metallic surface and its effect on grain distribution and packing, along with a sectional detail view (D8) of the surface;
- Fig. 9: shows a general illustration of laser shock peening with fiber optical delivery, along with a detail view (D9) of a fiber optical cable used in embodiments of the invention;
- Fig. 10: illustrates laser shock peening of an internal surface in accordance with an embodiment, along with a detail view (D10) of a probe head;
- Fig. 11: illustrates laser shock peening of an internal surface which is an internal surface of a tube-type part, in accordance with the embodiment of Fig. 10, as well as some alternative parts which may be treated and are formed as bent piece of pipe and as a pipe bifurcation, respectively;
- Fig. 12: schematically illustrates a section of the tube-type part shown in Fig. 11, wherein the internal surface of this section has been treated by laser shock peening, as well as a sectional detail view (D12) of the treated surface;
- Fig. 13: schematically illustrates a variant in which a probe head is provided with a distance sensor, in a view analogous to the detail view (D10) of Fig. 10;
- Fig. 14: shows a laser shock peening device and apparatus according to a further embodiment in perspective view, having an probe with an adaptable shape, comprising a plurality of probe segments and a laser beam transfer arrangement;
- Fig. 15: shows various components of a probe segment and a section of the laser beam transfer arrangement of the embodiment of Fig. 14, in a perspective exploded view;
- Fig. 16: shows a multi-segment probe in a variant of the embodiment of Fig. 14 during use for laser shock peening of an internal surface of an S-shaped portion of a pipe;

- Fig. 17: illustrates the principle of probe segmentation applied to an adaptable probe of a further embodiment, which allows for both horizontal and vertical angular movements of segments and for use of the probe in connection with geometries varying in 3D and/or including a varying cross-section;
- Fig. 18: schematically shows a portion of a pipe-type conduit including a 3D bend, internally treated in accordance with embodiments of the invention;
- Fig. 19: schematically shows a straight portion of a pipe-type conduit which comprises a change in cross-section from round to rectangular, wherein the passage of the conduit is bounded by an internal surface treated by laser shock peening in accordance with embodiments of the invention;
- Fig. 20: schematically shows a plate-type manifold having internal surfaces treated by laser shock peening in accordance with an embodiment;
- Fig. 21: schematically shows a valve having internal surfaces treated by laser shock peening in accordance with an embodiment; and
- Fig. 22: schematically shows a pump having internal surfaces treated by laser shock peening in accordance with a further embodiment.

In the figures of the drawings, elements, features and components which are identical, functionally identical and of identical action are denoted in each case by the same reference designations unless stated otherwise.

### DESCRIPTION OF EXEMPLARY EMBODIMENTS

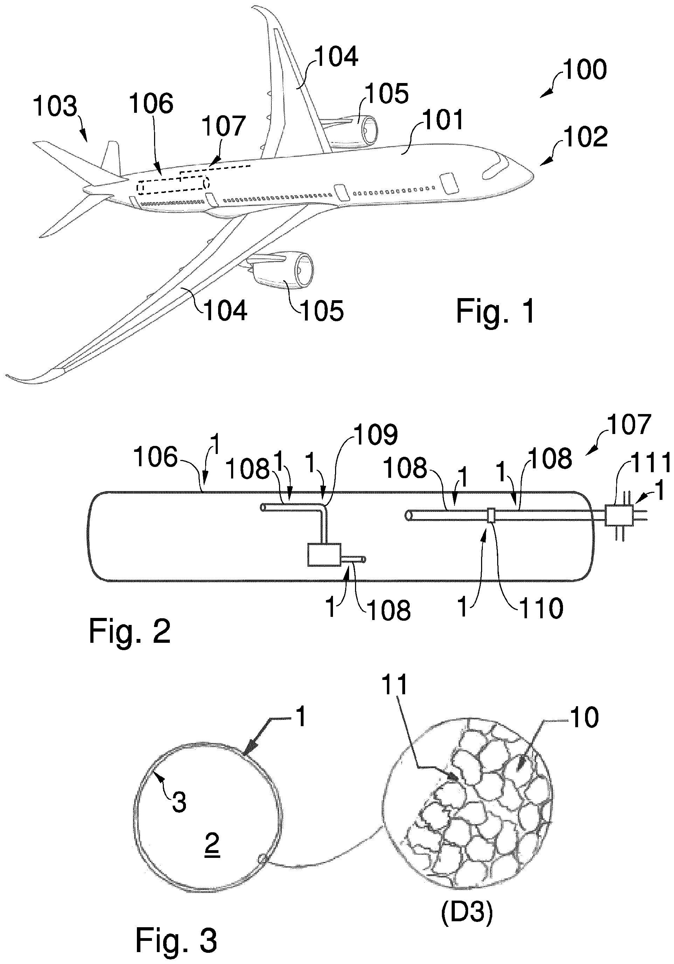

Fig. 1 shows an aircraft 100, for instance a commercial passenger aircraft, in which parts 1 treated in accordance with embodiments of the invention may be implemented. The aircraft 100 has a fuselage 101, a nose 102, an empennage 103, wings 104 and engines 105. The engines 105 are shown in schematic, exemplary manner and may be adapted to combustion of hydrogen as a fuel for the purpose of propulsion, or the engines 105 may be electric engines supplied with electric energy by fuel cells, not shown in Fig. 1, which in turn use hydrogen as a fuel. It is understood that the engines 105 may be implemented, configured and connected to the aircraft 100 in a manner different from the exemplary configuration in Fig. 1. The aircraft 100 may be useful to reduce or eliminate emissions of carbon dioxide due to propulsion during flight. The aircraft 100 may hence be configured as a "zero emission" aircraft. As an alternative to hydrogen-based propulsion, or in addition, other systems and devices in the aircraft 100 may be powered in a hydrogen-based manner, e.g. by electricity generated using fuel cells that consume hydrogen as fuel, which also can contribute to reducing emissions.

For storage of hydrogen during flight, a hydrogen storage tank 106 is accommodated in a rear section of the fuselage 101. The tank 106 preferably is adapted to storage of liquid, cryogenic hydrogen, and forms part of a hydrogen storage and supply system 107.

Fig. 2 shows, in exemplary and schematic manner, a portion of the hydrogen storage and supply system 107, including the hydrogen storage tank 106 as well as a plurality of further parts 1 that form systems installed inside and outside of the tank 106 and may be provided for the purposes of filling and re-filling the tank 106, for operational use e.g. during flight such as supplying the engines 105 or fuel cells with hydrogen, or for pressure regulation, for example.

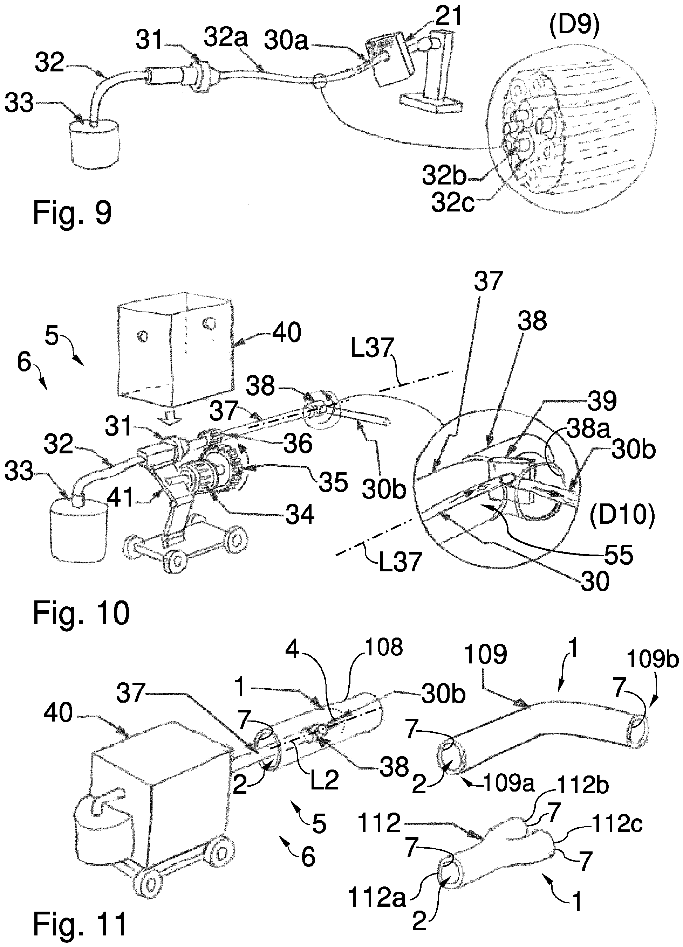

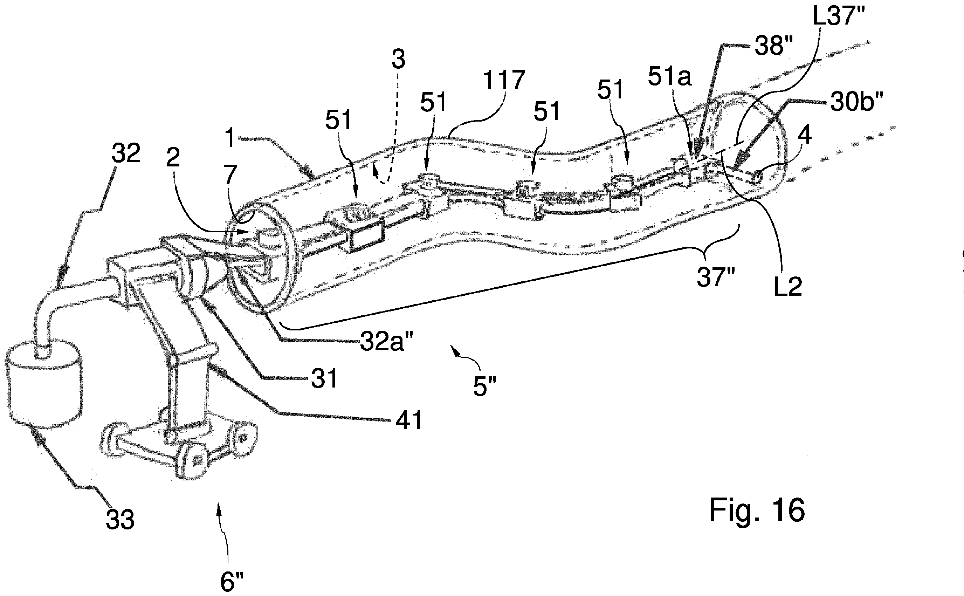

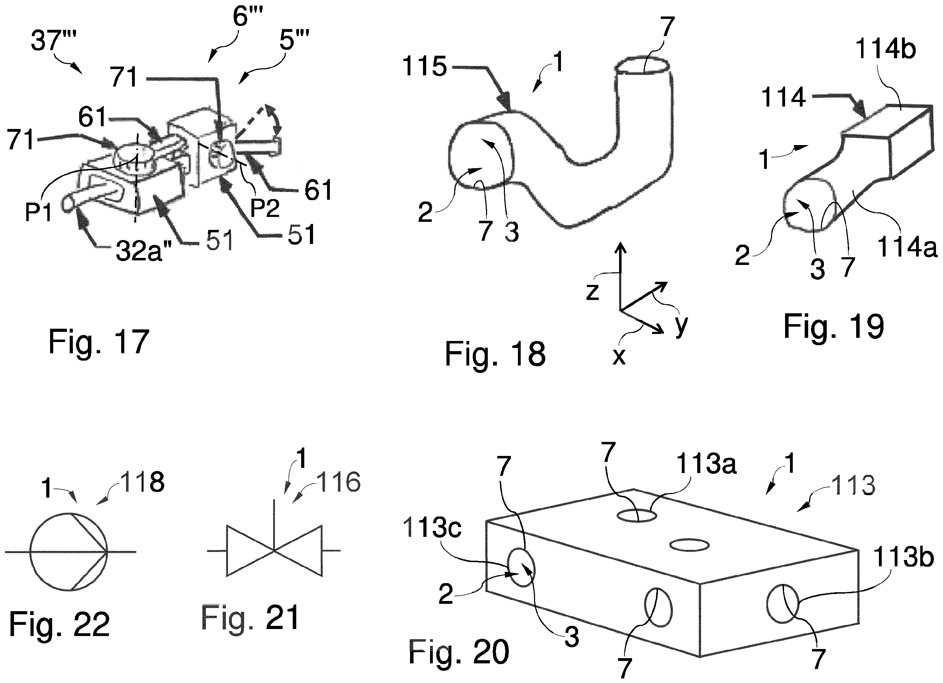

These parts 1 may include, for instance, conduits in the form of a straight pipe 108, a pipe bend 109, a pipe coupling or connector 110 or a heat exchanger 111. Further, these parts 1 may be generally formed as any system, fitting or accessory necessary or useful e.g. for filling or re-filling of the tank, operational use, pressure or flow regulation, etc., and which is in contact with liquid and/or gaseous hydrogen. Such a part 1 may for instance be a manifold, a bifurcation, a pump, a valve or gate, or any other fluid flow regulation and/or control device. An exemplary bifurcation 112 is schematically shown in Fig. 11, an exemplary plate-type manifold 113 in Fig. 20, and an exemplary valve 116 in symbolic manner in Fig. 21. As further examples of the part 1, Fig. 16 illustrates a pipe 117 having an S-shaped bend, Fig. 18 illustrates a pipe 115 that is three-dimensionally bent in space, Fig. 19 illustrates a pipe 114 having a changing inner cross-section, and Fig. 22 schematically illustrates an exemplary pump 118. The tank 106 and some or all of the further parts 1, e.g. 108-118, are usually pressurized during use. For the sake of a clear depiction, not all of the exemplary parts 108-118 are displayed in Fig. 2.

It is understood that the configuration of the parts 1 inside and outside of the tank 106 is exemplary and schematic only, and that any arrangement and combination of parts 1 inside and/or outside of the tank 106, such as those parts 108-118 mentioned above, which may be useful or required in an implementation of the system 107, is contemplated herein.

The tank 106 is configured as a pressure vessel made from a metallic material. Moreover, each of the further parts 1 such as the straight and bent pipes 108, 109, 114, 115, 117, the connector or coupling 110, the heat exchanger 111, and other fitting, system or accessory such as the manifold 113, the bifurcation 112, the pump 118, the valve 116, gate or other fluid flow regulation and/or control device, is made with a metal material, too. The metal material may be selected from titanium alloys, such as e.g. Ti 64, and aluminum alloys, such as e.g. Al 2219. Moreover, a steel may also be envisaged as the metal material, even though steel parts may have considerable weight and lightweight parts from a titanium alloy or an aluminum alloy may be preferable.

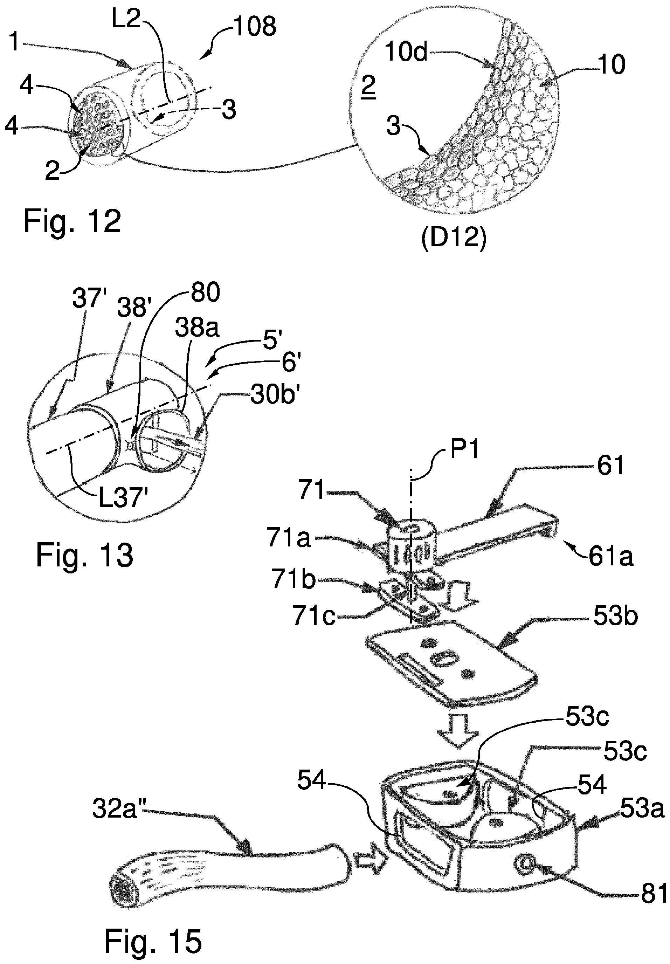

Metallic vessels and parts 1 of the types just described are generally reliable and their permeability advantageously is low. Fig. 3 shows a part 1, which may correspond to the tank or pressure vessel 106 or may be any of the parts 1 mentioned above and in contact with hydrogen, having a cavity or passage 2 bounded by an internal surface 3. Each of the parts 1 referred to above has at least one such passage or cavity 2, which is accessible from outside of the part 1 via at least one opening 7. As an example, Fig. 12 shows three such openings 7 of the bifurcation 112, configured as an inlet 112a and two outlets 112b, 112c. Further, Fig. 20 shows exemplary openings 7 in the form of various orifices 113a-113c of the manifold 113, which provide access to one or more internal passages 2 of the manifold 113, wherein these passages 2 may be quite complex.

The microstructure of metallic alloys is formed with individual grains 10, bonded to each other by cohesive forces. Also, the metal alloy can contain defects 11 extending into the microstructure from the surface 3 of the metallic part 1. This is schematically shown in the sectional detail view (D3) near the surface 3 in Fig. 3, wherein the internal surface 3 of the part 1 from a metal alloy has not been treated against hydrogen embrittlement. In Fig. 3, hydrogen, not shown, has just been filled into the cavity or passage 2, e.g. of the vessel.

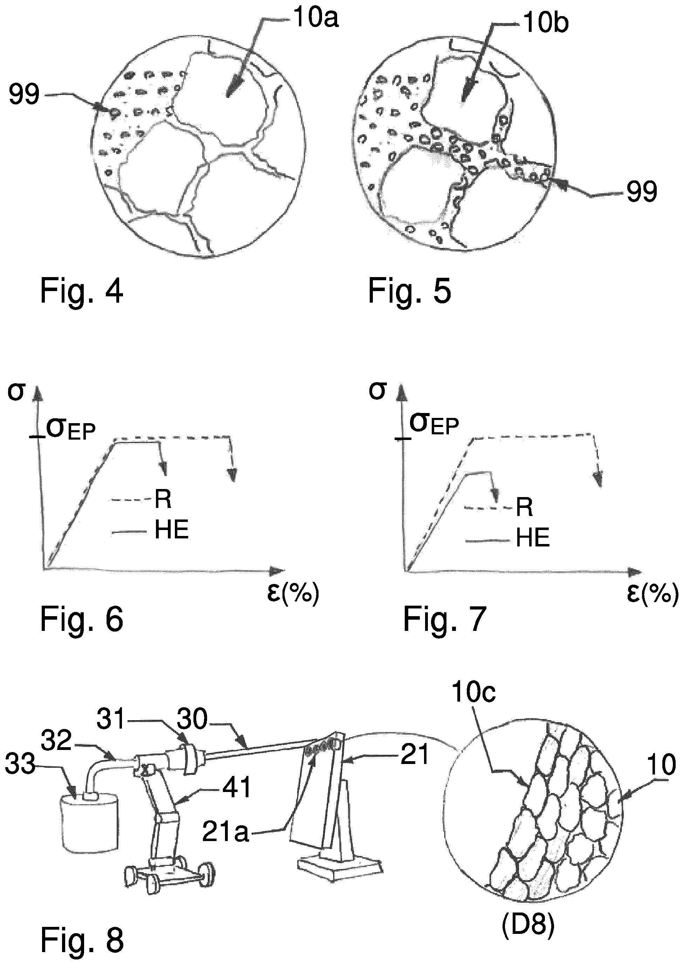

The metallic material is under stress, e.g. due to the internal pressure inside the cavity or passage 2. Permanent contact of hydrogen 99 with the surface 3 promotes reactions between hydrogen 99 on the atomic level and the metallic microstructure. Hydrogen 99, particularly hydrogen atoms, enter the microstructure via the defects 11 and passes between grains 10. Fig. 4-5 show the process for the untreated surface 3. The cohesion of the grains 10, denoted by 10a in the essentially unaffected microstructure, starts to be affected detrimentally and deteriorates, which is known as hydrogen embrittlement, due to the influence of hydrogen at the grain boundaries, especially in the region of the defects 11. Fig. 5 shows grains 10b with reduced cohesion. Due to this effect of hydrogen on the microstructure near the untreated surface 3, first, the ductility of the metal material decreases, see Fig. 6, which in a schematic stress-strain (σ-ε) diagram illustrates the reduced elongation at fracture for the hydrogen-embrittled case HE. A reference curve is shown as R in Fig. 6 for an analogous sample of the same metal material not exposed to hydrogen. Later in the process of hydrogen embrittlement, modulus and strength of the metal material are also affected and decrease, illustrated in Fig. 7 by a reduced gradient of the curve for the embrittled case HE and a lower stress at which the material sample HE fails.

The parts 1 of the hydrogen storage and supply system 107, outlined above, such as parts 108-116, can be efficiently and effectively treated against hydrogen embrittlement by laser shock peening (LSP) in accordance with one of the embodiments of the invention that will be described in the following.

In the embodiments of the present invention described herein, laser shock peening is used to treat the surface of the part 1, e.g. the internal surface 3, against such hydrogen embrittlement. The principle of such laser shock peening as used in the embodiments of the invention is illustrated in schematic manner in Fig. 8, which displays a laser source 33 generating a high-energy laser beam, a fiber optical cable 32 connecting the laser source 33 to a high energy laser optical lens 31, and a robotic device 41, e.g. a robotic arm, capable of moving the lens 31 to direct a pulsed laser beam 30 emanating from the lens 31 generally to a target 21 made from a metal alloy. High energy laser pulses are released from the lens 31 that are exactly focused on spots 21 a on the metallic surface of the target 21. At each spot 21a, a predefined number of short laser pulses is applied. Subsequently, the laser beam 30 is incrementally moved to the next spot. Detail (D8) schematically shows the peened surface of target 21 in cross-section and illustrates the penetration depth in a simplified way. More specifically, (D8) displays a penetration depth of three grain rows in a simplified manner, but in reality, the grain rows or layers encompassed by the penetration depth will be considerably more than three. The grains 10c, treated by the laser shock peening, are regularly distributed and are in close contact, or closely packed, since the microstructure of the treated material is under built-in compressive stress. Using the laser shock peening, a kind of cold working of a surface layer is performed.

The principle of a laser shock peening with fiber optic delivery is displayed in Fig. 9. The laser beam is delivered to the target 21, which may be a portion of the part 1, using a fiber optical cable 32a which is configured as a bundle of optical fibers arranged between the laser optical lens 31 and the target 21. Each of the fibers comprises a core 32b and a mantle 32c, see detail (D9), wherein the core 32b and the mantle 32c may e.g. each be made from a glass. The core 32b and the mantle 32c have a different index of refraction. The core 32b can transfer the laser pulse, and the interface between core 32b and mantle 32c will reflect most of the beam back into the core 32b, as long as the angles of incidence are comparatively small. The cable 32a is flexible and can hence be bent. The pulse duration is regulated by the laser optical lens 31. In this way, a target 21 which may not be visible in a direct, straight line from the lens 31 can be reached and treated by a pulsed high-energy laser beam 30a via the cable 32a, configured as a flexible bundle of optical fibers.

A laser shock peening apparatus 6 which, according to an embodiment, can be used to treat an internal surface 3 of a part 1 of a hydrogen storage and/or supply system 107 for use in the aircraft 100 or in a spacecraft, such as e.g. a portion of a straight pipe 108, by laser shock peening to reduce the probability of hydrogen embrittlement is schematically displayed in Fig. 10 along with a detail (D10), and in Fig. 11.

The set-up in Figs. 10, 11 aims at treating an internal surface 3 of such a part 1, e.g. a boundary of the cavity or passage 2 in the part 1, which is later, during use, going to be in direct contact with liquid and/or gaseous hydrogen 99. The apparatus 6 of Figs. 10, 11 comprises a laser shock peening device 5 and a robotic device 41. The device 5 illustrated in Figs. 10, 11 comprises an elongated, hollow probe 37 which is insertable into the cavity or passage 2 of the part 1 through the opening 7 in order to treat the internal surface 3 thereof. In Fig. 11, the probe 37 is inserted into the part 1 formed as a portion of the straight tube 108 having a circular cross-sectional shape.

At the tip of the probe 37, the probe 37 comprises a probe head 38 provided with an opening 38a. A pulsed laser beam 30b emanates from the opening 38a in the probe head 38 and is directed towards the internal surface 3 of the part 1 for laser shock peening thereof. The probe head 38 comprises an optical device capable of orienting the laser beam 30b, and may also be capable of focussing the laser beam 30b. In order to treat all regions of the surface 3, preferably in an equal manner, the probe 37 is rotatable about its longitudinal direction of extension L37. For example, the device 5, and thus the apparatus 6, comprise a drive device 34, configured as an electric motor, for rotating the probe 37. The drive device 34 may be coupled to the probe 37 via a transmission device including, for instance, sprocket wheels 35, 36 for adapting the angular velocity so that a desired rotational speed of the probe 37 can be obtained. The wheel 35 is attached to a shaft of the drive device 34, and the wheel 36 to the probe 37. Preferably, the probe 37 is rotated incrementally, e.g. in regular steps, and in each step a predefined series of laser pulses is directed towards each spot 4 of the surface 3 to be treated.

In many applications, e.g. when an internal wall surface 3 of a tube is to be treated, the surface 3 to be treated may be located laterally or peripherally with respect to the probe 37. The probe head 38 comprises a mirror 39 as a component of the optical device, or if appropriate may comprise a plurality of mirrors, which may be arranged inside the probe head 38. The mirror(s) 39 is/are arranged and configured to redirect the laser beam 30 running within the hollow interior of the probe 37, preferably along the longitudinal direction of extension L37, and turn the laser beam 30 through an angle of e.g. 90 degrees sideways. In this way, an emanating pulsed laser beam 30b can be focused on the spot 4 of the surface 3, which is the target. The arrangement with the hollow interior through which the pulsed laser beam 30 passes forms a laser beam transfer arrangement 55 of the device 5 and apparatus 6.

The probe head 38 may be configured to enable selectively adjusting an angle between the direction of the emanating laser beam 30b and the longitudinal direction of extension L37, wherein the latter during operation of the probe 37 is essentially parallel to a longitudinal direction of extension L2, or central axis, of the cavity or passage 2.

In particular, at a constant position or depth of insertion along the longitudinal direction L37, parallel to a longitudinal axis L2 of the portion of the pipe 108, the probe 37, and thus the probe head 38 including its mirror 39, rotate through an angle of 360 degrees, in increments, about an axis along the direction L37. In this manner, a complete ring-shaped section of the internal surface 3 is treated, spot by spot, by laser shock peening. Then, the probe 37 is longitudinally advanced by one increment for treating a subsequent ring-shaped section of the surface 3. Alternatively, only the probe head 38 may be configured to be rotatable about an axis along direction L37.

The device 5 and apparatus 6 for laser shock peening in accordance with the embodiment of Figs. 10, 11 comprises a laser optical lens 31 for generating the pulsed high energy laser beam 30. The lens 31 is connected to a laser source 33 by a fiber optical cable 32. From the lens 31, the laser beam 30 travels through a hollow interior space of the probe 37. The device 5, including the lens 31 and the probe 37, can be positioned and/or oriented using the robotic device 41, such as a robotic arm.

The lens 31, the drive device 34 and the transmission, e.g. comprising the sprocket wheels 35, 36, preferably are covered by a removable protective cover 40 during operation of the device 5 or apparatus 6. Fig. 11 illustrates, in exemplary manner, that the probe 37 protrudes out from the cover 40 and, via the opening 7, into the section of the pipe 108, the internal surface 3 of which is to be treated.

The device 5 and apparatus 6 of Figs. 10, 11 may also be used to treat at least sections of the internal surfaces 3 of parts 1 having non-straight geometries, e.g. wherein those parts 1 comprise straight tube-type ends that are accessible using the probe 37 of Fig. 10, 11, such as the pipe bend 109 or the pipe bifurcation 112, shown in exemplary manner in Fig. 11. Using the device 5 and apparatus 6 of Figs. 10, 11, the parts 109 and 112 may undergo treatment of their internal surface 3 by laser shock peening from each end 109a, 109b of the pipe bend 109, or from an inlet 112a and each of two outlets 112b, 112c of the bifurcation 112, where the parts 109, 112 each comprise openings 7.

In the example of Fig. 11, the straight portion of the pipe 108, the pipe bend 109 and the bifurcation 112 each comprise essentially circular internal cross-sections.

As an example, Fig. 12 shows a portion of the part 1 treated using laser shock peening on the internal surface of the part. In Fig. 12, the part 1 is a straight section of the pipe 108 having a circular cross-section. The overview in Fig. 12 schematically displays spots 4 on the internal surface 3 of the inner passage 2 that have undergone laser shock peening as described for the embodiment above. A cross-sectional detail (D12) of the inner wall of the part 1 shows the modified microstructure of the metal material in the region of the LSP-treated internal surface 3. The detail (D12) in Fig. 12 shows that some layers of grains 10d are under induced compression, and exhibit regular order and have close contact to each other. In this way, the opportunity for diffusion of hydrogen atoms into the metal material along the grain boundaries is significantly reduced. This helps to prevent or at least delay hydrogen embrittlement. Parts 1 for hydrogen contact, treated in this manner, are hence particularly reliable and durable.

Further, detail (D12) also displays grains 10 of the metallic microstructure of the material with an initial grain structure unaffected by the laser shock peening treatment. It should be noted that the effect of the laser shock peening on the grain structure gradually decreases with increasing depth, i.e. increasing distance from the surface 3.

In a laser shock peening device 5' and a laser shock peening apparatus 6' in accordance with a variant of the embodiment of Figs. 10-11, illustrated in Fig. 13, the probe head 38 of a probe 37' is provided with a distance measurement device 80, or distance sensor, which in particular is adapted to perform a contactless distance measurement between the probe head 38 and the surface 3 to be treated at or near the current spot 4. The distance measurement device 80 may be a laser distance sensor. Besides, reference is made to the explanations provided above for the device 5 and apparatus 6.

On the basis of the distance measurement provided by the distance sensor 80, the laser pulse energy can be adapted in order to take into account changes in that distance, for example for treating cavities or passages 2 having a changing cross-section and/or a non-circular cross-section, such as the tube 114. In particular, in case a round tube having a varying cross-sectional area is to be treated on the internal surface 3 thereof, a measurement for the internal diameter of the tube may in this manner be obtained and the laser pulse energy be accordingly adapted.

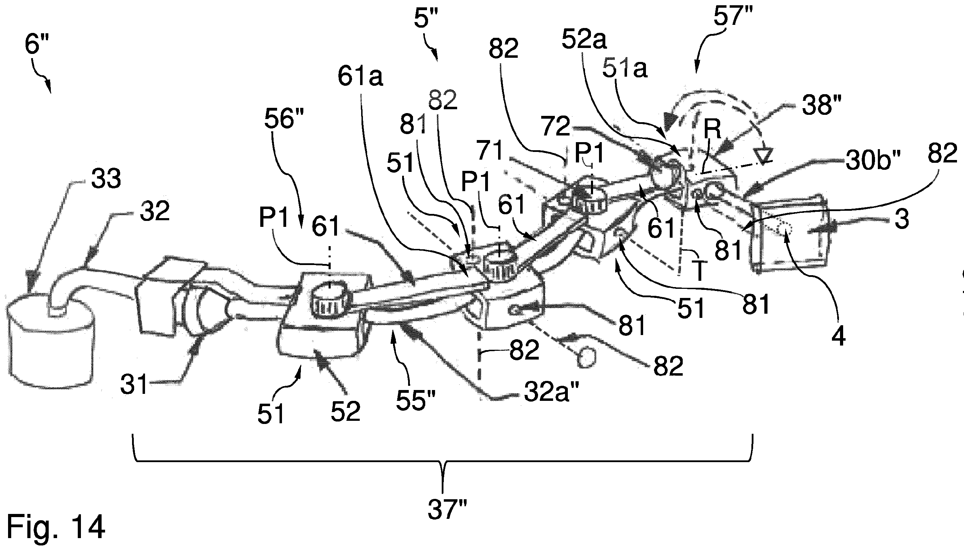

In order to provide an improved treatment of parts 1 such as the pipe bend 109 or the bifurcation 112, or of parts 1 having more complicated shapes such as the pipe 117, and in particular also effectively treat the bent internal sections thereof, a laser shock peening device 5", and a laser shock peening apparatus 6" including the device 5" as well as a robotic device 41, according to an embodiment that provide for an adaptability to non-straight internal geometries will now be described with reference to Figs. 14-16.

In the embodiment of Figs. 14-16, the high energy laser pulses are delivered from the lens 31 to a probe head 38" of a probe 37" of elongated shape by a bundle of optical fibers, forming a flexible fiber optical cable 32a" for laser pulse delivery. The lens 31 regulates the pulse durations. The fiber optical cable 32a" as such may be configured as described above with respect to Fig. 9 and can be bent and therefore can be made to follow a non-straight, e.g. curved, geometry of the cavity or passage 2 of the part 1. The probe 37" comprises several probe segments 51, 51a which, as such, comprise stiff components but are connected in a manner enabling changes in the overall shape of the probe 37". For example, a number of probe segments 51, including a last probe segment 51a which is configured as the probe head 38", may be chosen in a range from 3 to 10. In Fig. 14, the probe 37" has four segments 51, 51a. The fiber optical cable 32a" is carried by the plurality of probe segments 51, 51a.

The probe segments 51, 51a are connected in series in such a manner that successive ones of the probe segments 51, 51a can be moved relative to each other. The orientation of each probe segment 51, 51a in a plane, which for exemplary illustration is an essentially horizontal plane in the perspective views of Figs. 14, 15, can change. In other words, rotations about a plurality of substantially parallel pivot axes P1 are enabled.

In this way, the probe head 38" can be positioned inside a part 1 being formed as the pipe section 117 including an S-shaped bend. As the overall shape of the probe 37" is adaptable in this manner to the shape of the cavity or passage 2 of the part 1, the probe head 38" can always be located at an appropriate distance from the spot 4 on the internal surface 3 that is to be treated by the laser shock peening process. In addition to this, it can advantageously be avoided that the probe segments 51, 51a touch the internal surface 3, and hence, damage, scratches or contamination of the surface 3 can be easily avoided.

In the exemplary embodiment of Figs. 14-16, each probe segment 51 is formed with a box-shaped body 52. The device 5" and thus the apparatus 6" comprises a laser beam transfer arrangement 55" capable of transferring the pulsed laser beam provided by a laser source 33 from a first end 56" of the series of probe segments 51, 51a to a second end 57" of the series of probe segments 51, 51a. The laser beam transfer arrangement 55" is formed with the fiber optical cable 32a", which is led through each of the box-shaped bodies 52. A drive device 71, configured as an electric motor, e.g. a micro motor, is connected to each of the box-shaped bodies 52, for example arranged on the top of each box-shaped body 52. Each of the drive devices 71 is coupled to a proximal end of an associated pivotable, cantilevered segment arm 61 and is adapted to pivot the segment arm 61 to which it is coupled, thereby implementing a pivot axis P1. A distal end 61a of each segment arm 61 is connected to the box-shaped body 52 of the subsequent probe segment 51 or, at the second end 57", to the probe segment 51a.

Furthermore, each of the box-shaped bodies 52 also accommodates at least one distance measuring device or distance sensor 81. By means of a distance measuring laser beam 82, each distance measuring device 81 is capable of measuring a distance between the box-shaped body 52 and the internal surface 3 of the cavity or passage of the part 1.

In some implementations, as illustrated in schematic manner in Fig. 14, one or more or all of the probe segments 51 may each be provided with more than one distance measuring device 81. For example, distance of the segment 51 relative to the surface 3 may be measured along two axes perpendicular to each other and in two directions each, e.g. from each of four peripherally arranged sides of the box-shaped body 52, except the longitudinally-oriented sides thereof. Such a segment 51 may comprise four distance measurement devices 81.

The probe segment 51a at the second end 57" of the series, which forms the probe head 38", has a box-shaped body 52a. In the same manner as described above, the probe segment 51a is provided with at least one distance measurement device 81, or with several distance measurement devices 81 for measuring distance in several directions.

Preferably, the drive device 71 of each segment 51 is controlled on the basis at least of a distance measurement or distance measurements performed by the one or more distance measurement devices 81 arranged on the subsequent probe segment 51, or 51a, in the series, which is the segment 51 or 51a to which the segment arm 61 is connected at its distal end 61a. In other words, the direction of the cantilever arm 61 can be controlled by distance signals which are provided by the subsequent segment 51, or 51a.

The probe head 38" is adapted to orient the pulsed laser beam provided via the laser beam transfer arrangement 55" and to direct the pulsed laser beam 30b" towards the internal surface 3 of the part 1. In order to re-orient the laser beam arriving via the optical fiber bundle of the cable 32a", the probe head 38" comprises an optical device including a mirror inside the box-shaped body 52a which re-directs the laser beam in a lateral direction towards the internal surface 3 of the part 1. The optical device may in some implementations also be adapted to focus the pulsed high energy laser beam 30b" towards the spot 4.

The probe head 38" also comprises at least one drive device 72, e.g. an electric motor, which may be arranged internally of the box-shaped body 52a or may be attached thereto, and which is configured to rotate the probe head 38" about at least one axis, in particular an axis R locally parallel to a longitudinal extension L37" of the probe 37". Direction L37" may be oriented essentially in parallel to the longitudinal direction of extension L2, e.g. a local central axis, of the cavity or passage 2. Furthermore, the probe head 38" may comprise a further drive device, not illustrated in detail, which may also be arranged internally of the box-shaped body 52a or may be attached thereto, and which is configured to tilt the mirror in order to tilt the emanating laser beam 30b" about an axis transverse to the longitudinal direction of extension L37" of the probe 37", e.g. about the tilt axis T in Fig. 14 that is perpendicular to L37". This may help to even better take into account changes in cross-sectional area or shape of the cavity or passage 2.

Fig. 15 displays an exploded view of one of the probe segments 51. The box-shaped body 52 is formed with a hollow base part 53a and with a top plate 53b capable of closing the base part 53a at the top thereof. Fig. 15 further shows that the segment 51 comprises the drive device 71, formed as an electric motor. A segment drive device top bracket 71a and a segment drive device bottom bracket 71b, connected to a rotatable segment drive device axis 71c, are attached to the box-shaped body 52 by attaching the brackets 71a, 71b to the top plate 53b from the top and bottom thereof, respectively. A housing or stator part of the drive device 71 is connected to a proximal end of the cantilevered segment arm 61. Accordingly, the drive device 71, e.g. configured as a stepper motor or the like, is capable of pivoting the segment arm 61 in a controlled manner, by varying an angle between the box-shaped body 52 and the segment arm 61 about the axis 71c. In this way, the pivot axis P1 is implemented along the axis 71c.

The flexible fiber optical cable 32a" extends through the box-shaped body 52, see also Fig. 14. For this purpose, the base part 53a is provided with openings 54 on opposite, longitudinally-oriented sides thereof. In an interior space of the base part 53a, the box-shaped body 52 is provided with guiding elements 53c, which may be configured as guiding cushions, which face each other and have a rounded shape. The fiber optical cable 32a" passes between the guiding elements 53c. The guiding elements 53c contact the cable 32a" when the overall shape of the probe 37" is changed by relative movement of the segments 51, 51a. Thus, the fiber optical cable 32a" can be gently bent around the rounded faces of one of the guiding cushions 53c, which thereby prevent the bending radius from becoming too small. In this way, damage to the optical fiber bundle due to excessive bending can be prevented.

Fig. 16 shows the multi-segment probe 37", in this variant having an additional probe segment 51 so that the total number of segments is five. The probe 37" includes the laser beam transfer arrangement 55" including the bundle of optical fibers 32a", and in Fig. 16 has been gradually inserted through an opening 7 into a curved work piece or part 1 which is configured as the pipe 117 having an S-shaped, bent geometry. Using the probe 37", laser shock peening of the internal surface 3 of the passage 2 of the S-shaped part 1 can be efficiently performed. As the probe 37" is gradually inserted into the passage 2, the shape of the probe 37" automatically adjusts to maintain an appropriate distance to the surface 3. As a constant distance to the surface 3 can be maintained, the spots 4 on the surface 3 are equally and uniformly treated by laser shock peening.

The principle of a multi-segment probe may be repeated, see Fig. 17, in order to provide for an adaptability of the shape of the probe in two dimensions transverse to each other. Fig. 17 shows two subsequent probe segments 51 of a probe 37‴ of a device 5‴ or apparatus 6‴ for laser shock peening according to a further embodiment, wherein these probe segments 51 are connected in such a way that pivot axes P1 and P2 of the segment arms 61 of the consecutive segments 51 are not parallel, but extend in directions transverse to each other, in particular in directions perpendicular to each other. In other words, a probe segment 51 has been added which has been rotated to be arranged perpendicular to the previous segment 51, whereby the pivot axis is turned by 90 degrees, thereby implementing the pivot axis P2. For instance, a series of probe segments 51 may be arranged in an alternating manner, rotated through 90 degrees relative to each other, to form pairs of segments 51 that enable angular changes about the axes P1 and P2, e.g. in both horizontal and vertical directions. This results in an alternating sequence of pivot axes P1, P2. For example, in Fig. 17, the segment arm 61 of the segment 51 on the right performs vertical angular changes, and the segment arm 61 of the segment 51 on the left in Fig. 17 perform horizontal angular changes, each by its associated drive device 71. In this manner, a multi-segment probe 37‴ is obtained which can move freely through 3D internal geometries, for example through the internal passage 2 of a part 1 embodied in Fig. 18 in exemplary manner as the pipe 115 with a circular cross-section, and bending in two different directions x and z, e.g. both horizontally as well as vertically, to form the 3D-bent pipe 115.

The embodiment of Fig. 17 preferably also includes distance measurement devices 81 for controlling the angular changes generated using the drive devices 71. In the embodiment of Fig. 17, distances along two different directions preferably are measured by each segment 51. Reference is made to the explanations provided above for the embodiment of Figs. 14-16. Again, a drive device 71 of one probe segment, in Fig. 17 on the left, may be controlled based on the distance measurement(s) performed at the subsequent probe segment, e.g. in Fig. 17 on the right.

The device 5‴ and apparatus 6‴ explained with reference to Fig. 17 may also be useful for treating the internal surface 3 of the pipe 114 with a changing internal cross-sectional shape, e.g. an internal cross-sectional shape that changes from a round, e.g. circular, internal cross-section in a portion 114a to a rectangular or square internal cross-section in a portion 114b. A part 1 of this type is illustrated in exemplary manner in Fig. 19. The adaptability of the probe shape, and the movability of the probe head, helps to direct the emanating laser beam to be as perpendicular to the surface 3 as possible. For example, the probe head may be laterally moved away from a central axis of the cavity or passage 2, across a section of the cavity or passage 2, in order to change the angle of incidence of the laser beam onto the surface 3.

In internal passages or cavities 2 which include, for instance, an increasing cross-sectional area, an appropriate treatment by laser shock peening can be performed by including a combination of positioning the probe head in relation to each surface spot 4 to be treated, e.g. by moving around or across a cross-sectional plane of the cavity or passage 2, to obtain proper distance as well as proper angle of incidence of the laser beam on the surface 3.

The embodiments of Figs. 14-17, which comprise the probe 37", 37‴ having an adaptable shape, may advantageously be used not only for treating internal surfaces 3 of conduits such as the pipes 114, 115 or 117, but may also be useful for treating internal passages and cavities 2 of e.g. the manifold 113 which has the various inlet and outlet orifices 113a, 113b, 113c, or of the valve 116 or pump 118 which may comprise a complex internal passage 2. In the case of parts 1 that include internal movable components, for instance the valve 116 or pump 118, those movable components may be removed before performing the laser shock peening treatment proposed in accordance with one of the preceding embodiments. The movable component may be treated separately by laser shock peening if desired, and the part 1 may then be re-assembled for use.

In a laser shock peening device and apparatus in accordance with a variant of the embodiments of Figs. 14-17, which is not illustrated in the drawings, the probe 37" or 37‴ may be provided with spacers having one or more rotatable wheels and adapted to mechanically contact the surface 3 in order to maintain a distance between the probe and the surface 3. In such a variant, distance measurement devices based on a contactless distance measurement such as by laser may be omitted. For example, one or more of the probe segments 51, 51a may each be provided with at least one, preferably more than one, spacer of this type.

Furthermore, it is conceivable, in some variants of the embodiments described above with reference to Figs. 14-17, to modify one or more of the segment arms 61 in such a way that a length of the segment arm 61 is telescopically adjustable. For this purpose, the segment arm 61 may then be provided with a further drive device, not illustrated in the figures, in order to bring about the change in length. Accordingly, a distance between neighboring probe segments may be made adaptable. In this case, the fiber optical cable 32a" is provided with a length reserve, and the probe is configured such that the cable 32a" can easily slide in order to take account of such telescopic changes in the length of an arm 61.

With regard to distance measurements described above, different distances may be deduced from the measurements. In particular, such distances may be distances between outer faces of the probe and the surface for the purpose of avoiding collisions. Further, in particular, with regard to correctly focussing the emanating laser beam and/or control the energy introduced at the treated spot, a distance between the optical device of the probe head, e.g. the mirror, and the spot may be deduced.

Laser shock peening may be performed in any of the embodiments described above without providing any additional intermediate transparent layer covering the surface, besides the surrounding air. However, in variants of the above-explained embodiments, the surface 3 to be treated may be covered with a layer of liquid, such as a water layer or water film, during the treatment for cooling the treated spots 4 and for further focussing the pulsed laser beam. Laser shock peening with and without such a liquid layer is contemplated in the context of the present invention.

Further, the laser shock peening devices and apparatuses according to the embodiments of the invention described above may preferably be provided with suitable devices for data transfer and processing, not illustrated in the drawings, in particular when distance measurement data is obtained and processed for controlling various ones of the drive devices described and/or for adapting the operation of the laser source 33.

Also, any of the devices and apparatuses for laser shock peening in accordance with the embodiments described above may not only be useful for treating internal surfaces 3, but may also be used for treating external surfaces, such as a complicated and/or strongly bent external surface, of a metallic workpiece.

The present invention makes it possible in particular to achieve one or more of the following advantages:
- a protective treatment of the inside surface of parts and systems made with metal material(s) against hydrogen embrittlement is enabled;
- such protective treatment of internal surfaces of parts and systems having a non-straight geometry, e.g. including curves, bends, S-curves etc., is enabled, and at the same time, it can be avoided in some embodiments to touch the surface, whereby scratching and contamination are reliably prevented;
- in some advantageous embodiments, three-dimensional internal geometries, such as bends in both horizontal and vertical directions, can be treated by laser shock peening;
- in some advantageous embodiments, internal geometries with changing cross-section, such as e.g. a change from a circular to a rectangular cross-section, or with an increasing or decreasing cross-sectional area, can be treated by laser shock peening;
- in some advantageous embodiments, internal geometries with asymmetric cross-sections can be efficiently treated;
- in some further embodiments, non-circular internal geometries, for instance non-circular cavities or passages, can be treated;
- generally, the invention can be used in connection with parts having cavities or passages of various different sizes, e.g. different internal diameter;
- the invention contributes to considerably extending the life cycle of treated parts;
- the invention can be used with all types of metallic materials - for instance, the pulse duration and energy content of the laser pulses may be adapted as appropriate for treating a given metal material or alloy;
- the invention avoids electro-chemical treatments of parts in a bath, which might unnecessarily coat all surfaces of the part and also may be laborious;
- the invention also avoids involvement of chemical agents;
- in some embodiments, based on a distance measurement using one or more distance sensor(s), e.g. laser distance sensor, the laser pulse duration and energy content can be adjusted based on such measurement(s);
- in some embodiments, the flexibility and bendability of the probe facilitates the treatment of long and complex, possibly bent, internal geometries;
- in some embodiments, the probe head, which may be flexible and bendable, can be held centered in the cavity or passage in a simple manner using the mechanical spacers with wheels;
- the laser shock peening process might be repeated during maintenance e.g. of the hydrogen storage and/or supply system.

Although the invention has been completely described above with reference to embodiments of the invention, the invention is not limited to these embodiments but may be modified in many ways.

### LIST OF REFERENCE SIGNS

- 1: part
- 2: cavity or passage
- 3: internal surface
- 4: laser shock peened spot
- 5, 5', 5", 5‴: laser shock peening device
- 6, 6', 6", 6‴: laser shock peening apparatus
- 7: opening
- 10: grain in metallic microstructure of metal alloy
- 10a: grain in metallic microstructure of metal alloy, with unaffected cohesion of grains
- 10b: grain in metallic microstructure of metal alloy, with reduced cohesion of grains
- 10c, 10d: grain in metallic microstructure of metal alloy, with grains evenly and densely distributed in compression
- 11: defect in metallic microstructure
- 21: target
- 21a: laser peened spot
- 30, 30a: laser beam
- 30b, 30b': laser beam
- 30b": laser beam
- 31: laser optical lens
- 32: fiber optical cable
- 32a: flexible fiber optical cable
- 32a": flexible fiber optical cable
- 32b: core
- 32c: mantle
- 33: laser source
- 34: drive device
- 35, 36: sprocket wheel
- 37, 37', 37": probe
- 37‴: probe
- 38, 38', 38": probe head
- 38a: opening
- 39: mirror
- 40: cover
- 41: robotic device
- 51, 51a: probe segment
- 52, 52a: box-shaped body
- 53a: base part
- 53b: top plate
- 53c: guiding element
- 54: opening
- 55, 55": laser beam transfer arrangement
- 56": first end (series)
- 57": second end (series)
- 61: probe segment arm
- 61a: distal end
- 71,72: drive device
- 71a: probe segment drive device top bracket
- 71b: probe segment drive device bottom bracket
- 71c: probe segment drive device axis
- 80, 81: distance measurement device
- 82: distance measuring laser beam
- 99: hydrogen in liquid and/or gaseous form
- 100: aircraft
- 101: fuselage
- 102: nose
- 103: empennage
- 104: wing
- 105: engine
- 106: hydrogen storage tank
- 107: hydrogen storage and supply system
- 108: straight pipe
- 109: pipe bend
- 109a, 109b: end
- 110: coupling or connector
- 111: heat exchanger
- 112: bifurcation
- 112a: inlet
- 112b: first outlet
- 112c: second outlet
- 113: manifold
- 113a, 113b: orifice
- 113c: orifice
- 114: pipe with change in cross-section
- 114a: portion having circular internal cross-section
- 114b: portion having rectangular or square internal cross-section
- 115: pipe with 3D bend
- 116: valve
- 117: pipe with S-shaped bend
- 118: pump
- σ: stress
- σ_{EP}: elastic limit
- ε: strain
- R: reference sample
- HE: sample affected by hydrogen embrittlement
- L2: longitudinal direction of extension (cavity or passage)
- L37, L37': longitudinal direction of extension (probe)
- L37": longitudinal direction of extension (probe)
- P1, P2: pivot axis
- R: rotation axis
- T: tilt axis

## Claims

1. Laser shock peening device (5"; 5‴) for treating an internal surface (3) of a part (1) made with a metallic material, the laser shock peening device (5"; 5‴) comprising a probe (37"; 37‴) formed with a plurality of probe segments (51, 51a) that are connected in series in such a manner that successive ones of the probe segments (51, 51a) can be moved relative to each other, and a laser beam transfer arrangement (55") capable of transferring a pulsed laser beam provided by a laser source (33) from a first end (56") of the series of probe segments (51, 51a) to a second end (57") of the series of probe segments (51, 51a), wherein the probe segment (51a) at the second end (57") of the series is configured as a probe head (38") adapted to orient the laser beam (30b") provided via the laser beam transfer arrangement (55") and to direct the laser beam (30b") towards the internal surface (3) of the part (1).

2. Laser shock peening device according to claim 1,
**characterized in that** the probe head (38") is configured to direct the pulsed laser beam (30b") to a target portion (4) of the internal surface (3) located laterally with respect to the probe (37"; 37‴).

3. Laser shock peening device according to claim 1 or 2,
**characterized in that** at least one of the probe segments (51, 51a), preferably at least the probe head (38"), more preferably several or all of the probe segments (51, 51a), is or are provided with at least one distance measurement device (81) configured to perform a contactless distance measurement between the probe segment (51) and the internal surface (3).

4. Laser shock peening device according to any one of the preceding claims, **characterized in that** at least one of the probe segments (51) is provided with a drive device (71), in particular an electric motor, and is mechanically connected to a neighboring one of the probe segments (51, 51a) by a pivotable segment arm (61), wherein the drive device (71) is adapted to pivot the segment arm (61).

5. Laser shock peening device according to any one of the preceding claims, **characterized in that** the probe head (38") includes an optical device, in particular comprising a mirror, and **in that** the probe head (38") is configured to orient the laser beam (30b") by pivoting the laser beam (30b") about a first axis (R) that locally substantially follows a longitudinal direction (L37") of extension of the probe (37"; 37‴) and/or about a second axis (T) that is locally non-parallel, in particular transverse or perpendicular, to the longitudinal direction (L37") of extension of the probe (37"; 37‴).

6. Laser shock peening device according to any one of the preceding claims, **characterized in that** the laser beam transfer arrangement (55") includes at least one optical fiber, in particular an optical fiber cable (32a") comprising a bundle of optical fibers.

7. Laser shock peening apparatus (6'; 6"; 6‴) for treating a surface (3) of a part (1) made with a metallic material, the laser shock peening apparatus (6'; 6"; 6‴) comprising a probe (37'; 37"; 37‴) formed with a probe head (38'; 38"), a laser beam transfer arrangement (55; 55") capable of transferring a pulsed laser beam provided by a laser source (33) along the probe (37'; 37"; 37‴) towards the probe head (38'; 38"), and at least one distance measurement device (80; 81), in particular a laser distance sensor, configured to perform a contactless distance measurement between the probe (37'; 37"; 37‴) and the surface (3) of the part (1), in particular between the probe head (38'; 38") and the surface (3), wherein the probe (37'; 37"; 37‴) or the probe head (38'; 38") is adapted to orient the laser beam provided via the laser beam transfer arrangement (55; 55") and to direct the laser beam (30b'; 30b") towards the surface (3) of the part (1).

8. Laser shock peening apparatus according to claim 7,
**characterized in that** the surface (3) is an internal surface of the part (1) which forms a boundary of a cavity or passage (2) in the part (1).

9. Laser shock peening apparatus according to claim 7 or 8,
**characterized in that** the probe head (38'; 38") is configured to direct the laser beam (30b'; 30b") to a target portion (4) of the surface (3) located laterally with respect to the probe (37'; 37"; 37‴) and **in that** the distance measurement device (80; 81) is configured to perform the contactless distance measurement between the probe head (38'; 38") and the target portion (4) of the surface (3).

10. Method of treating an internal surface (3) of a part (1) made with a metallic material by laser shock peening, wherein the internal surface (3) forms a boundary of a cavity or passage (2) in the part (1) and the part (1) has an opening (7) providing access to the cavity or passage (2) from outside of the part (1), wherein the method includes
introducing a probe (37; 37'; 37"; 37‴) formed with a probe head (38; 38'; 38") into the cavity or passage (2) through the opening (7) with the probe head (38; 38'; 38") ahead;
performing laser shock peening using a pulsed laser beam (30b; 30b'; 30b") emanating from the probe head (38; 38'; 38") towards the internal surface (3); and
while the probe head (38; 38'; 38") is within the cavity or passage (2),
changing a distance between the probe head (38; 38'; 38") and the internal surface (3) and/or
moving a position of the probe head (38; 38'; 38") within a cross-sectional plane of the cavity or passage (2); and/or
changing an beam direction of the pulsed laser beam (30b; 30b'; 30b") by tilting the beam direction about an axis (T) that is locally transverse to a path of extension (L2) of the cavity or passage (2) and/or
changing an overall shape of the probe (37"; 37‴).

11. Method according to claim 10,
**characterized in that** the cavity or passage (2) follows a non-straight path and/or comprises at least one change in cross-sectional shape and/or comprises at least a portion (114b) having a non-circular cross-section.

12. Method according to claim 10 or 11,
**characterized in that** the method includes performing a contactless distance measurement between the probe (37'; 37"; 37‴) and the internal surface (3), in particular at least between the probe head (38'; 38") and the internal surface (3).

13. Part (1) of a hydrogen storage and/or supply system (107) adapted to be installed in an aircraft or spacecraft (100), the part (1) comprising an internal metallic surface (3) which, during use, is constantly or temporarily in direct contact with liquid hydrogen and/or gaseous hydrogen, wherein the internal metallic surface (3) forms a boundary of a cavity or passage (2) in the part (1) and wherein the internal metallic surface (3) has been treated by laser shock peening.

14. Part according to claim 13,
**characterized in that** the cavity or passage (2) follows a non-straight path and/or comprises at least one change in cross-sectional shape and/or in cross-sectional area and/or comprises at least a portion (114b) having a non-circular cross-section.

15. Part according to claim 13 or 14,
**characterized in that** the part (1) is a conduit or system or a fitting or accessory, in particular a straight section of a conduit, e.g. a straight pipe (108, 114), or a bent section of a conduit, e.g. a pipe bend (109, 115, 117), or a coupling or a connector (110) or a manifold (113) or a bifurcation (112) or a heat exchanger (111) or a pump (118) or a valve (116) or another fluid flow regulation or control device, or **in that** the part (1) is a tank (106) or vessel.

16. Aircraft or spacecraft (100) comprising a hydrogen storage and/or supply system (107) which includes at least one part (1) according to any one of claims 13 to 15.
